# EUROPÄISCHE PATENTSCHRIFT

(11) **EP 1 739 654 B1**
(45) Veröffentlichungstag und Bekanntmachung des Hinweises auf die Patenterteilung: **30.07.2008**
(21) Anmeldenummer: 06019734.0
(22) Anmeldetag: 16.08.2000
(51) Int. Cl.: G10L 15/20

(54) **Verfahren zum Betrieb einer Mehrfachmikrofonanordnung in einem Kraftfahrzeug und eine Mehrfachmikrofonanordnung**
Method for operating a multiple microphone system in a motor vehicle and multiple microphone system
Procédé destiné au fonctionnement d'un dispositif à microphones multiples dans un véhicule automobile et un dispositif à microphones multiples

(30) Priorität: 08.09.1999 DE 19942868
(43) Veröffentlichungstag der Anmeldung: 03.01.2007
(62) Teilanmeldung aus: 00117264.2
(73) Patentinhaber: Volkswagen AG, 38436 Wolfsburg (DE)
(72) Erfinder: Tontch, Kilian, 50769 Köln (DE); Wengelnik, Heino, 38442 Wolfsburg (DE); Schaaf, Klaus, 38116 Braunschweig (DE)
(74) Vertreter: Zucker, Volker

(56) Entgegenhaltungen:
- EP-A1- 0 472 356
- LLEIDA E ET AL: "Robust continuous speech recognition system based on a microphone array" ACOUSTICS, SPEECH AND SIGNAL PROCESSING, 1998. PROCEEDINGS OF THE 1998 IEEE INTERNATIONAL CONFERENCE ON SEATTLE, WA, USA 12-15 MAY 1998, NEW YORK, NY, USA,IEEE, US, Bd. 1, 12. Mai 1998 (1998-05-12), Seiten 241-244, XP010279154 ISBN: 0-7803-4428-6

## Beschreibung

Die Erfindung betrifft ein Verfahren zum Betrieb einer Mehrfachmikrofonanordnung in einem Kraftfahrzeug, bei weichem die Einzelsignale der Einzelmikrofone erfasst und elektronisch nachbearbeitet werden, sowie eine Mehrfachmikrofonanordnung selbst, gemäß Oberbegriff der Patentansprüche 1 und 3.

Die Platzierung von Mikrofonen im Kraftfahrzeug kann mehrere Aufgaben haben. Zum einen sind für den Betrieb von Kommunikationssystemen, wie Bordtelefon und dgl. mehr, Mikrofone notwendig. Überdies gibt es jedoch auch sprachunterstützte Eingabesysteme, mit denen Schalt- oder Betätigungsbefehle sprachgesteuert, also ohne Handhabung von Betätigungselementen ausgelöst werden können. In größeren Fahrzeugen, wie bspw. in Bussen, dienen Mikrofonanordnungen zur Unterstützung von Kommunikation innerhalb des Fahrzeuges.

Weiterhin sind neuere Anwendungen möglich, bei denen über Mikrofone Schall innerhalb des Fahrzeuges erfasst wird und elektronisch in der Form verarbeitet wird, dass daraus Gegenbeschallungssignale zur destruktiven Interferenz von Geräuschen innerhalb des Fahrzeuges eingesetzt werden.

Die WO 99/49698 betrifft ein Verfahren sowie eine Einrichtung zum Betrieb einer Mikrofonanordnung, insbesondere bei einem Kraftfahrzeug. Dabei ist der zentrale Punkt sowohl in verfahrensgemäßer als auch in einrichtungsgemäßer Hinsicht die Festlegung eines virtuellen optimierten Mikrofonortes.

Die Druckschrift Giuliani, D; Omologo, M.; Svaizer, P.; "Talker Localization and Speech Recognition using a Microphone Array and a Cross-Powerspectrum Phase Analysis"; ICSLP 94; Yokohama; Japan; Sept. 18 - 22; 1994; XP000855485 beschreibt ein Ermittlungssystem mit einer auf vier allseitig gerichteten Mikrofonen basierenden Anordnung, welche eingesetzt wird, um eine strahlenförmige Version der originalen akustischen Nachricht zu reproduzieren, welche in einer verrauschten und widerhallenden Umgebung ermittelt wird.

So ist der JP 7 176 178 eine Mehrfachmikrofonanordnung in Kraftfahrzeugen bekannt, welche zur Erfassung der Stimmen aller Mitfahrer dient. Dabei wird erreicht, dass beispielsweise bei in Betrieb genommener Audioanlage eine Leise- oder Stummschaltung der Musik erfolgt, immer dann, wenn einer der Fahrzeuginsassen spricht.

Aus der EP 0 721 178 A2 ist ein Multikanalkommunikationssystem bekannt, welches zur Unterdrückung von Echos und Störgeräuschen bei der Kommunikation bzw. während der Kommunikation dient.

Aus der US 3 784 747 ist eine Anordnung bekannt, bei welcher die Unterdrückung von Störsignalen bei der Verwendung von Mehrfachmikrofonanordnungen als solches im Vordergrund steht. Hierbei werden Rückkopplungseffekte und dgl. behandelt. Ein weiteres Geräuschunterdrückungsverfahren ist aus der EP 0 729 288 A2 bekannt.

Den letzten drei vorab beschriebenen Verfahren und Anordnungen ist jedoch eine Problematik grundlegend. Die Platzierung von Mikrofonen fixiert in allen diesen Fällen den Ort der Schallaufnahme innerhalb des Kraftfahrzeuges. Befindet sich nun eine Sprachquelle, d. h. ein Fahrzeuginsasse in entsprechender Entfernung zum besagten Mikrofon, so nimmt dasselbe um noch einigermaßen sensitiv Sprache aufnehmen zu können, natürlich auch Fahrgeräusche oder Geräusche innerhalb des Fahrzeuges auf. Außerdem erhöhen sich Rückkopplungseffekte naturgemäß bei einer solchen Situation.

Aus der EP 0 660 639 A1 ist daher eine mechanische Ausrichtbarkeit eines Einzelmikrofones in einem Kraftfahrzeug angegeben. Das Mikrofon ist dabei in einer Art Kugelgelenk angeordnet, welches in verschiedene Richtungen drehbar sein soll, um eine gewisse Richtcharakteristik gewährleisten zu können. Jedoch auch hierbei ergibt sich nachteiligerweise, dass ein so installiertes Einzelmikrofon zwar in geringfügigem Maße gerichtet werden kann, aber die Schallwege zu unterschiedlichen Schallquellen durchaus unterschiedlich groß sein können. Es ist damit auch keine gleichbleibende Qualität der Sprachaufnahme möglich.

Aus der Druckschrift Lleida, E; et al. : "Robust Continuous Speech Recognition System Based On A Microphone Array"; ICASSP 1998, Seattle; USA; 12-15. Mai 1998; Seiten 241-244; XP10279154 ist eine weitere Anordnung bekannt, bei welcher die Unterdrückung von Störsignalen bei der Verwendung eines Mikrofonarrays erfolgt.

Vor dem Hintergrund sprachgenerierter Eingaben bei Kraftfahrzeugen kommt jedoch der Qualität der ankommenden Sprachsignale eine wesentliche Bedeutung zu. Eine schlechte Spracherkennung führt somit zu einer fehlerbehafteten Betätigung der sprachgesteuerten Funktionen, was im Übrigen auch die Fahrsicherheit beeinträchtigen kann. Dies insbesondere deshalb, weil Fehlfunktionen den Fahrzeugführer immer deutlich vom Verkehrsgeschehen ablenken.

Der Erfindung liegt somit die Aufgabe zugrunde, sowohl ein Verfahren zum Betrieb einer Mehrfachmikrofonanordnung, sowie auch eine Mehrfachmikrofonanordnung selbst dahingehend zu verbessern, dass Sprachbefehle immer optimal aufgenommen werden können.

Die gestellte Aufgabe ist bei einem Verfahren der gattungsgemäßen Art erfindungsgemäß durch die kennzeichnenden Merkmale des Patentanspruches 1 gelöst.

Weitere vorteilhafte Ausgestaltungen des erfindungsgemäßen Verfahrens sind im nachfolgenden abhängigen Anspruch 2 angegeben.

Hinsichtlich einer Mehrfachmikrofonanordnung selbst ist die gestellte Aufgabe erfindungsgemäß durch die kennzeichnenden Merkmale des Patentanspruches 3 gelöst. Weitere vorteilhafte Ausgestaltungen hierzu sind im Anspruch 4 angegeben.

Das erfindungsgemäße Verfahren besteht hierbei darin, dass zur präziseren Ansteuerung einer sprachgesteuerten Eingabe von Steuer- oder Betätigungsbefehlen, die Signale der Einzelmikrofone simultan und im Zeitbezug zueinander erfasst und bspw. fouriertransformiert werden, und dass aus den daraus gewonnenen bzw. gewinnbaren Parametern und dem Kohärenzbezug der Einzelsignale selbst, die Sprachsignale vor Ansteuerung der Befehlseingabe auf Plausibilität geprüft werden.

Wesentlich ist hierbei, dass mehrere Mikrofone verwendet werden. Diese sind an verschiedenen Orten im Fahrzeug weitestgehend asymmetrisch platziert. Durch diese asymmetrische Verteilung ist es unwahrscheinlich, dass die Sprachquelle dann zu irgendeinem Zeitpunkt gleich weit zu allen Einzelmikrofonen entfernt ist. Wichtig ist hierbei jedoch, dass die Signale aller Einzelmikrofone ausgewertet werden; also auch solche, die näher oder weiter entfernt von der Sprachquelle platziert sind. Dadurch können die Einzelmikrofonsignale simultan und in einem Zeitbezug zueinander erfasst werden. Durch unterschiedliche Entfernungen zum Mikrofon ergeben sich natürlich auch unterschiedliche Laufzeiten. Schon durch die besagte Laufzeiterfassung der einzelnen Mikrofonsignale ist es möglich, die Sprachquelle als solches räumlich zu orten. Die erfassten Einzelsignale der Mikrofone werden dabei auch jeweils separat voneinander analysiert d.h. bspw. fouriertransformiert.

Im Falle einer Signalanalyse mit Fouriertransformation findet diese dabei vom Frequenzraum in den Phasenraum statt. Aus den Signalen, und den daraus gewonnenen Parametern sowie dem Kohärenzbezug der Einzelsignale zueinander, können somit die jeweiligen Sprachquellen, die ja unterschiedlich sein können, jeweils geortet werden. Die Fülle der Parameter als solche eröffnet die Möglichkeit vor Ansteuerung der Befehlseingabe eine Plausibilitätsprüfung des ankommenden Sprachbefehles vorzunehmen.

In weiterer vorteilhafter Ausgestaltung der Erfindung ist angegeben, dass zusätzlich aus den Signalparametern und dem Kohärenzbezug eine Richtcharakteristik ermittelt, mit Hilfe welcher der virtuelle Mikrofonort der tatsächlichen Sprachquelle nachgeführt wird. Durch eine solche Ortung ist die Mikrofonsignalauswertung als solches optimierbar, wodurch die Sprachbefehle als solches auch besser qualifiziert werden können.

In vorteilhafter Ausgestaltung der Erfindung ist es möglich, dass aus Abprüfung der Plausibilität und virtueller Lokalisierung der Sprachquelle übrige, delokale Geräuschquellen durch Subtraktion eliminiert. Dabei kommt die Ermittlung des virtuellen Mikrofonortes zur Wirkung. Die ankommende Sprachqualität ist dahingehend verbesserbar, dass auch die Nebengeräuschquellen qualifiziert erkannt werden können. Dies führt zu einer weiteren Steigerung der Qualität ankommender, auswertbarer Sprachbefehle.

Weiterhin ist erfindungsgemäß vorgeschlagen, dass die Ermittlung der Richtcharakteristik und das Nachführen des virtuellen Mikrofonortes noch während eines einzelnen Sprechvorganges erfolgt. Eine solche Realisierung ist mit geeigneten elektronischen Mitteln möglich, die eine entsprechend schnelle Auswertbarkeit liefern.

Eine entsprechende Mehrfachmikrofonanordnung in erfindungsgemäßer Weise ist in den kennzeichnenden Merkmalen des Patentanspruches 3 angegeben. Auch hierbei steht im Vordergrund eine Mehrfachanordnung einzelner separater und autarker Mikrofone innerhalb des Fahrzeuges, bei welcher digitale Speichermittel zur adaptiven Stimmerkennung und Stimmcharakteristikaerkennung vorgesehen sind. Eine entsprechende Einzelsignalbewertung der Mikrofone erfolgt dabei in einer digitalen Signalprozessoreinheit, in welcher zunächst die ankommenden einzelnen Mikrofonsignale jeweils separat analysiert bzw. fouriertransformiert werden. Weiterhin werden analoge Größen der Einzelmikrofonsignale innerhalb dieser DSP (Digitaler Signal Prozessor) digitalisiert. Der so für jedes Einzelmikrofon vorliegende Parametersatz, der jedoch auf ein und dieselbe Sprachquelle zurückgeht, können nun Laufzeit-, und Kohärenzbestimmung, zusätzlich zu einer Ortung des virtuellen Mikrofonortes, also des Ortes der Sprachquelle vorgenommen werden. Damit kann eine entsprechende virtuelle Richtung oder Nachführung bzw. eine daraufhin gerichtete Richtcharakteristik der gesamten Mehrfachmikrofonanordnung realisiert werden. Wichtig ist hierbei die simultane Bearbeitung aller einzelnen Signale, um eine gewisse Verarbeitungsschnelligkeit ermöglichen zu können. Hiernach erfolgt eine digitale Nachbearbeitung und die entsprechende selektive Erkennung von darin enthaltenen Sprachbefehlen, die die Eingabeeinheit kennt. Darauf aufbauend werden die erkannten Sprachbefehle dann in einer entsprechenden Einheit generiert und somit elektrische Stellsignale, die aus den erkannten Sprachbefehlen ermittelt werden, den entsprechenden Stellorganen zugeführt.

In Anwendungen kann daran gedacht werden, Audio- Informations- und Kommunikationssysteme auf diese Weise zu steuern, aber auch fahrzeuginterne Einrichtungen, wie Navigationssystem, Klimaanlage, Beheizungssystem, Lichtanlage sowie ggf. auch Sicherheitseinrichtungen und auch Betriebszustände des Fahrzeuges. Bei den letztgenannten Einwirkungsmöglichkeiten handelt es sich um Einwirkungen auf das Betriebsverhalten des Fahrzeuges selbst. Hierbei ergibt sich selbstredend eine hohe Anforderung an die sichere Auswertung der Sprachbefehle, da sie ansonsten zu Fehlfunktionen führen können, die die Sicherheit des Fahrzeuges im Betrieb dramatisch beeinträchtigen können.

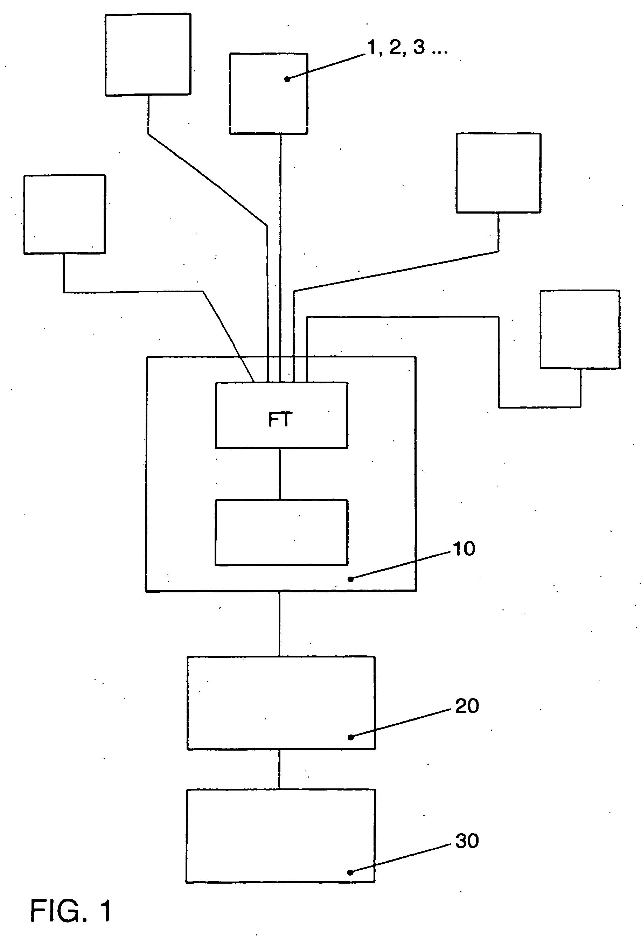

Die Erfindung ist in der Zeichnung dargestellt und nachfolgend näher beschrieben.

Die Abbildung zeigt eine schematische Darstellung im Hinblick auf die Funktionsweise des erfindungsgemäßen Verfahrens sowie der Mehrfachmikrofonanordnung selbst. Innerhalb des Fahrzeuges sind mehrere Mikrofone 1, 2, 3, ...räumlich verteilt an verschiedenen Orten angeordnet. Die räumlich verteilte Anordnung erfolgt dabei in geeigneter Weise so, dass sich keine planaren oder linearen Mikrofonarrays ausbilden. Vielmehr ist eine 3 dimensionale Verteilung der Mikrofone notwendig. Dies bedingt dann eine entsprechende Verteilung der einzelnen Mikrofone innerhalb der Fahrgastzelle insgesamt. Jedes der Mikrofone ist dabei signaltechnisch mit der digitalen Signalprozessoreinheit DSP 10 verbunden. Innerhalb der besagten digitalen Signalprozessoreinheit findet eine Sprachsignalanalyse statt zu welcher auch eine Fouriertransformation der einkommenden Einzelmikrofonsignale jeweils separat voneinander vorgenommen werden kann. Die Bildung eines Kohärenzbezuges aus der simultanen Bearbeitung aller Einzelmikrofonsignale gestattet zum ersten eine Signallaufmessung und die Inbezugsetzung aller Signale zueinander, so dass eine Ortung des virtuellen Mikrofonortes, d. h. der Ort der Sprachquelle möglich ist.

So entsteht zu jedem Einzelmikrofonsignal ein jeweils unabhängiger Satz von Parametern. Diese Parameter werden in der digitalen Signalprozessoreinheit DSP dahingehend ausgewertet, dass eine Ortung des virtuellen Mikrofonortes, also des Ortes der Sprachquelle und eine darauf abgestellte Richtcharakteristik virtuell ermittelbar ist. Diese Richtcharakteristik ist dabei darauf abgezielt, das Spracheingabesignal für die sprachgesteuerte Befehlseingabe in optimaler Weise erkennen zu können. Mit Hilfe der so ermittelten Richtcharakteristik ist selbst bei Variation des Ortes der Sprachquelle ein optimales Spracheingabesignal gewinnbar. Das heißt, der virtuelle Mikrofonort kann somit simultan, d. h. noch während des Sprechvorgangs so optimiert nachgeführt werden, dass eine optimale Erkennung der sprachgenerierten Befehlseingabe möglich ist.

In einer digitalen Nachbearbeitung 20 der Spracherkennung erfolgt somit eine Prüfung auf Plausibilität. Hier werden die aus den Einzelmikrofonsignalen und der daraus bestimmten Richtcharakteristik gewonnenen Sprachinformationen noch einmal selektiv bewertet und auf Plausibilität geprüft.

Damit ist realisiert, dass die simultane Verarbeitung aller Einzelmikrofonsignale mit diesem digitalen Signalprozessorsystem zu einem resultierenden Gesamtsignal führt. Dieses resultierende Gesamtsignal ist es dann, welches in der Spracherkennung ankommt und die Plausibilitätsprüfung auf die Verfügbarkeit entsprechender Befehle hin auch durchgeführt werden kann.

Das gesamte System ist somit und so zu sagen adaptiv, womit gemeint ist, dass die Bewegungen der Sprachquelle, d. h. beispielsweise des Kopfes des Sprechers, zeitsynchron detektiert werden. Mit dieser Kenntnis wird der Fokus der Mikrofongruppe adaptiv auf den Ort der Schallentstehung ausgerichtet und nachgeführt. Zu diesem einen, resultierenden Gesamtsignal hinzukommend, erfolgt dann die Spacherkennung und die entsprechende Auswahl eines der verfügbaren Sprachbefehle. Dieser Sprachbefehl wird sodann einer Spacheingabeeinheit 30 zugeführt, in welchem die besagten dazugehörigen Stellsignale generiert werden. Mit Hilfe dieser generierten Stellsignale werden dann aus den erkannten Sprachbefehlen die entsprechenden Geräte und Systeme in entsprechender Weise angesteuert.

Insgesamt ergibt sich somit, dass zwei untergeordnete Verfahrensweisen hierbei das gesamte erfindungsgemäße Verfahren ergeben. Zum einen wird zunächst eine Mikrofonsignalauswertung aller Einzelmikrofonsignale durchgeführt, woraus zeitsynchron eine Lokalisierung des virtuellen Mikrofonortes ermittelt wird. Mit Hilfe dieser Ermittlung werden nun die ankommenden Signale dahingehend optimiert, dass sich ein resultierendes Gesamtsignal in optimierter Weise ergibt. Vor Ansteuerung der Befehlseingabe erfolgt in einem weiteren Verfahrensschritt eine Prüfung auf Plausibilität.

Insgesamt ist das System so sicher ausgelegt, dass auch betriebsbezogene Einstellungen über sprachgenerierte Befehlseingaben zukünftig möglich sind, da das Verfahren ein optimales Maß an der Erkennung tatsächlich "gemeinter" Sprachbefehle durchstellen kann. Dies betrifft selbst solche, die das Fahrverhalten im Betrieb des Fahrzeuges beeinflussen, und somit an die Zuverlässigkeit und Genauigkeit der gesamten Spracherkennung hohe Anforderungen stellt. Darüber hinaus kann das System auch adaptiv angelegt sein, in dem Sinne, dass gewisse "stimmbezogenen" Parameter, die personenindividuell sind erkannt werden können, bspw. durch Mustervergleich. Dadurch kann das Spracheingabesystem selbsttätig Personen mit ihren Sprachspezifika erkennen, womit sich das System selbsttätig auf verschiedene Personen, bzw. verschiedene Fahrzeugführer einstellen. Hierzu müssen zu bereits beschriebenen elektronischen Komponenten Speicherelemente hinzukommen, mit deren Hilfe Sprachmuster bzw. Sprachspezifika abgespeichert, bzw. adaptiv abgespeichert werden können.

## Patentansprüche

1. Verfahren zum Betrieb einer Mehrfachmikrofonanordnung in einem Kraftfahrzeug, wobei Mikrofone (1, 2, 3, ...) signaltechnisch mit einer digitalen Signalprozessoreinheit DSP (10) derart verschaltet bzw. verbunden werden, dass jedes Einzelmikrofonsignal für sich simultan und zeitsynchron ausgewertet wird, woraus eine Richtcharakteristik eines virtuellen Mikrofonortes ermittelt und nachgeführt wird und dass in der Bewertung der Mikrofonsignale zu einem resultierenden Gesamtsignal die Sprachbefehle generiert und vor Auslösung innerhalb einer digitalen Nachbearbeitungseinheit (20) zur Spracherkennung auf Plausibilität geprüft werden, wobei unter Verwendung von digitalen Speichermitteln eine adaptive Stimmerkennung und Stimmcharakteristika-erkennung durchgeführt wird, wobei die Mikrofone (1, 2, 3, ...) räumlich unter Vermeidung linearer oder planarer Mikrofonarrays in der Fahrgastzelle des Kraftfahrzeuges verteilt angeordnet werden.

2. Verfahren nach Anspruch 1, **dadurch gekennzeichnet, dass** eine digitale Signalprozessoreinheit DSP (10) sowie eine digitale Nachbearbeitung und Spracherkennung (20) und eine Spracheingabeeinheit (30) zu einer zusammenhängenden Baugruppe bzw. zu einem zusammenhängenden Gerät zusammengefasst werden.

3. Mehrfachmikrofonanordnung in einem Kraftfahrzeug, mit einer Mehrzahl innerhalb der Fahrgastzelle verteilt angeordneten Mikrofone sowie einer nachgeschalteten elektronischen Bearbeitungseinheit, wobei die Mikrofone (1, 2, 3, ...) signaltechnisch mit einer digitalen Signalprozessoreinheit DSP (10) derart verschaltet bzw. verbunden sind, dass jedes Einzelmikrofonsignal für sich simultan und zeitsynchron auswertbar ist, woraus eine Richtcharakteristik eines virtuellen Mikrofonortes ermittel- und nachführbar ist und dass in der Bewertung der Mikrofonsignale zu einem resultierenden Gesamtsignal die Sprachbefehle generiert und vor Auslösung innerhalb einer digitalen Nachbearbeitungseinheit (20) zur Spracherkennung auf Plausibilität prüfbar sind, wobei digitale Speichermittel zur adaptiven Stimmerkennung und Stimmcharakteristikaerkennung vorgesehen sind und die Einzelmikrofone (1, 2, 3, ...) räumlich unter Vermeidung linearer oder planarer Mikrofonarrays in der Fahrgastzelle des Kraftfahrzeuges verteilt angeordnet sind.

4. Mehrfachmikrofonanordnung nach Anspruch 3, **dadurch gekennzeichnet, dass** die digitale Signalprozessoreinheit DSP (10) sowie die digitale Nachbearbeitung und Spracherkennung (20) und die Spracheingabeeinheit (30) zu einer zusammenhängenden Baugruppe bzw. zu einem zusammenhängenden Gerät zusammengefasst sind.

## Claims

1. Method for the operation of a multiple microphone arrangement in a motor vehicle, where microphones (1, 2, 3, ...) are wired up or connected for signalling purposes to a digital signal processor unit DSP (10) such that each single microphone signal is individually evaluated simultaneously and at synchronous times, and this is used for ascertaining and tracking a directional characteristic for a virtual microphone location, and that the assessment of the microphone signals to produce a resultant total signal involves the speech commands being generated and, prior to release, being checked for plausibility within a digital post-processing unit (20) for speech recognition, with digital storage means being used to perform adaptive voice recognition and voice characteristics recognition, the microphones (1, 2, 3, ...) being arranged in the motor vehicle's passenger compartment in a physical distribution avoiding linear or planar microphone arrays.

2. Method according to Claim 1, **characterized in that** a digital signal processor unit DSP (10) and also a digital post-processing and speech recognition section (20) and a speech input unit (30) are combined to form a cohesive assembly or to form a cohesive appliance.

3. Multiple microphone arrangement in a motor vehicle, having a plurality of microphones arranged in distributed fashion within the passenger compartment and also a downstream electronic processing unit, where the microphones (1, 2, 3, ...) are wired up or connected for signalling purposes to a digital signal processor unit DSP (10) such that each single microphone signal can be individually evaluated simultaneously and at synchronous times, and this is able to be used for ascertaining and tracking a directional characteristic for a virtual microphone location, and that the assessment of the microphone signals to produce a resultant total signal involves the speech commands being generated and, prior to release, being able to be checked for plausibility within a digital post-processing unit (20) for speech recognition, with digital storage means being provided for adaptive voice recognition and voice characteristics recognition and the single microphones (1, 2, 3, ...) being arranged in the motor vehicle's passenger compartment in a physical distribution avoiding linear or planar microphone arrays.

4. Multiple microphone arrangement according to Claim 3, **characterized in that** the digital signal processor unit DSP (10) and also the digital post-processing and speech recognition section (20) and the speech input unit (30) are combined to form a cohesive assembly or to form a cohesive appliance.

## Revendications

1. Procédé destiné au fonctionnement d'un dispositif à microphones multiples dans un véhicule automobile, les microphones (1, 2, 3, ...) étant interconnectés, respectivement reliés du point de vue technique du signal avec une unité de traitement numérique du signal DSP (10) de telle sorte que chaque signal de microphone individuel est exploité individuellement de manière simultanée et synchrone, pour déterminer et suivre une caractéristique directionnelle d'un emplacement de microphone virtuel et que l'exploitation des signaux du microphone en vue d'un signal global résultant génère les commandes vocales et vérifie avant le déclenchement la vraisemblance dans une unité de retraitement numérique (20) pour la reconnaissance de la parole, l'utilisation de moyens de mémorisation numériques assurant une reconnaissance adaptative de la voix et des traits caractéristiques de la voix, les microphones (1, 2, 3, ...) étant disposés selon une répartition spatiale évitant les réseaux de microphones linéaires ou planaires dans la cellule des passagers du véhicule automobile.

2. Procédé selon la revendication 1, **caractérisé en ce qu'**une unité de traitement numérique du signal DSP (10), ainsi qu'une unité de retraitement numérique et de reconnaissance de la parole (20) et qu'une unité d'enregistrement de la parole (30) sont regroupées dans un groupe structurel cohérent, respectivement dans un appareil cohérent.

3. Dispositif à microphones multiples dans un véhicule automobile, avec une multiplicité de microphones répartis dans la cellule des passagers du véhicule automobile ainsi qu'une unité électronique de traitement en aval, les microphones (1, 2, 3, ...) étant interconnectés, respectivement reliés du point de vue technique du signal avec une unité de traitement numérique du signal DSP (10) de telle sorte que chaque signal de microphone individuel peut être exploité individuellement de manière simultanée et synchrone, ce qui permet de déterminer et de suivre une caractéristique directionnelle d'un emplacement de microphone virtuel et que l'exploitation des signaux du microphone en vue d'un signal global résultant génère les commandes vocales et qu'elle puisse vérifier avant le déclenchement la vraisemblance dans une unité de retraitement numérique (20) pour la reconnaissance de la parole, l'utilisation de moyens de mémorisation numériques assurant une reconnaissance adaptative de la voix et des traits caractéristiques de la voix, et les microphones individuels (1, 2, 3, ...) étant disposés selon une répartition spatiale évitant les réseaux de microphones linéaires ou planaires dans la cellule des passagers du véhicule automobile.

4. Dispositif à microphones multiples selon la revendication 3, **caractérisé en ce que** l'unité de traitement numérique du signal DSP (10), ainsi que l'unité de retraitement numérique et de reconnaissance de la parole (20) et que l'unité d'enregistrement de la parole (30) sont regroupées dans un groupe structurel cohérent, respectivement dans un appareil cohérent.
